# EUROPEAN PATENT SPECIFICATION

(11) **EP 2 322 034 B1**
(45) Date of publication and mention of the grant of the patent: **30.07.2014**
(21) Application number: 09425454.7
(22) Date of filing: 12.11.2009
(51) Int. Cl.: A01K 13/00

(54) **Apparatus for the treatment of slaughter animals**
Vorrichtung zur Behandlung von Schlachttieren
Appareil pour le traitement des animaux d'abbatage.

(43) Date of publication of application: 18.05.2011
(73) Proprietor: Lem Carni S.p.A., 40060 Toscanella di Dozza (BO) (IT)
(72) Inventor: Lama, Giambattista, I-40060 Toscanella di Dozza (Bologna) (IT)
(74) Representative: Lanzoni, Luciano

(56) References cited:
- EP-A2- 0 630 557
- WO-A1-97/43897

## Description

The present invention has the object to provide an apparatus for the treatment of slaughter animals.

In greater detail, the present invention refers to an apparatus for the treatment of slaughter animals during the breeding thereof. In particular, the apparatus is used for treating cattle to improve the quality of meat.

A known treatment carried out in particular on some bovine breeds, provides for manipulating the animal's muscles for better distributing the unsaturized fats by incorporating them into the flesh and avoiding the agglomeration thereof into specific regions such as the flanks of the animal.

Such treatment makes it possible therefore to improve the marbling of the flesh which, upon the slaughter process, will become particularly soft and able to provide a tender and tasty meat.

The bovine manipulation treatment are carried out by hand through massage operations carried out on the animal and repeated throughout its breeding time.

Generally, the hand-operated massage is carried out on given muscles of the animal to dissolve the tendons thereof and turning them into fat. The regions of fat agglomeration, for example the animal's flank and back, are accurately massaged as well to provide marbling of the flesh.

Such treatment, although able to produce a particularly valuable and high-quality flesh after slaughter, exhibits, however, major drawbacks.

Such drawbacks are mainly related to the manual action by the operator who, periodically, has to perform a continuous massage of the animal.

Consequently, the full treatment implies significant disadvantages as far as the breeding time and cost are concerned.

It is also known from documents WO 97/43897 and EP 630557 a construction including an accommodation for animals, such as cows, which accommodation comprises a massage member and a brushing member for massaging respectively brushing the animals. The construction further comprises a longitudinal guide means across which the massage member and/or the brushing member can be moved in the longitudinal direction of the animal.

In this context, the technical task on which the present invention is based is to propose an apparatus for the treatment of slaughter animals which is able to overcome the drawbacks of the above cited prior art.

In particular, the object of the present invention is to provide an apparatus for the treatment of slaughter animals which is able to massage the animals in automatic manner.

A further object of the present invention is to provide an apparatus for the treatment of slaughter animals which is constructionally simple and cost-effective. The indicated technical task and the specified objects are substantially achieved by an apparatus for the treatment of slaughter animals according to claim 1.

Further characteristics and advantages of the present invention will appear more clearly from the indicative and thus non-limiting description of a preferred but non-exclusive embodiment of an apparatus for the treatment of slaughter animals, as illustrated in the accompanying drawings, wherein:

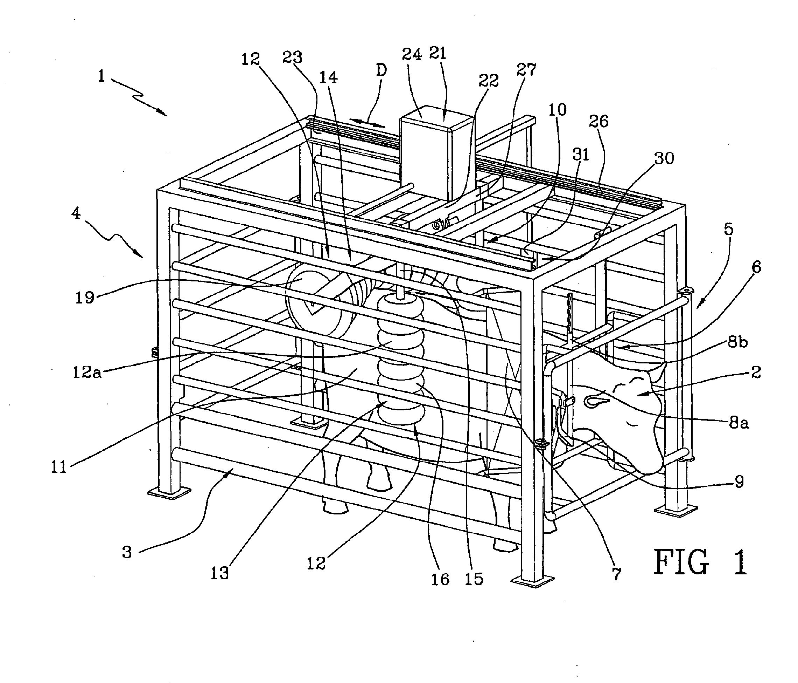

- Fig. 1 is a perspective view of an apparatus for the treatment of slaughter animals according to the present invention;

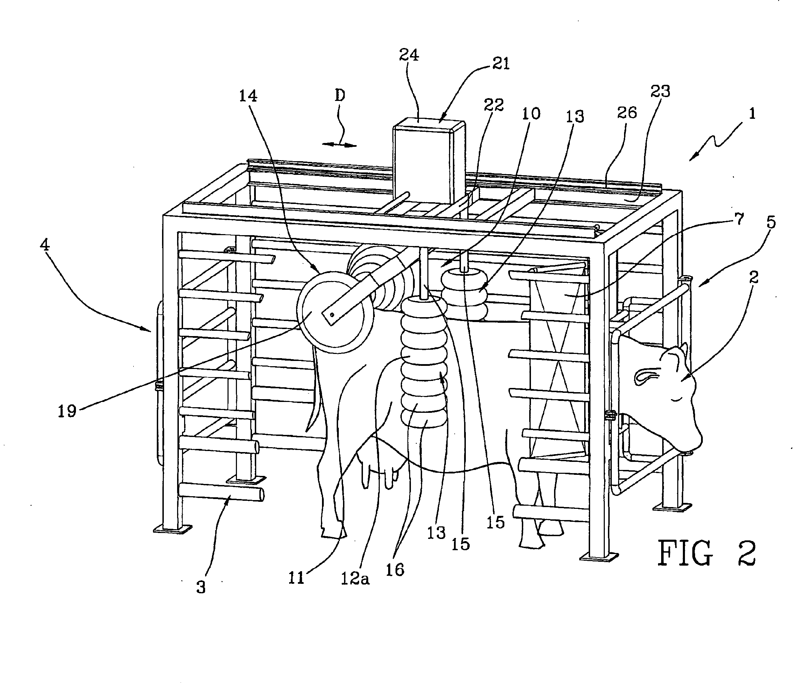

- Fig. 2 is a perspective view, with some parts taken away for showing other parts of the apparatus of Fig. 1 more clearly;

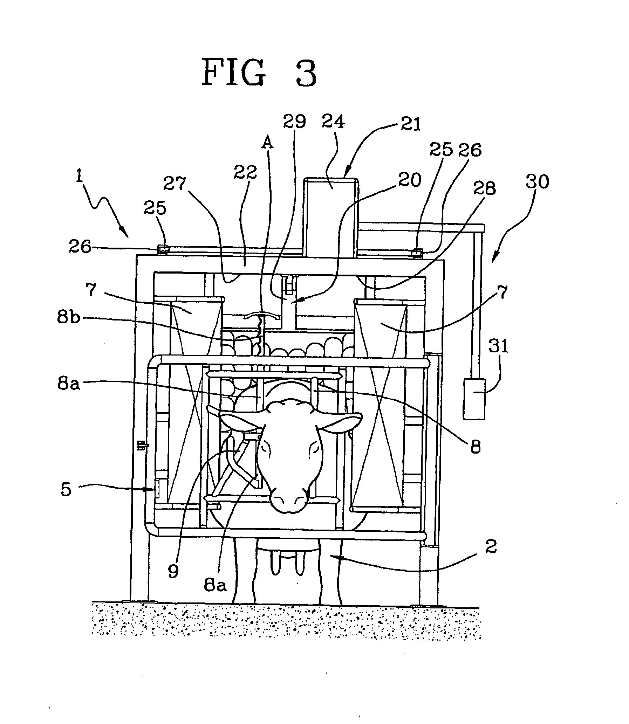

- Fig. 3 is a front view of the apparatus shown in Fig. 1; and

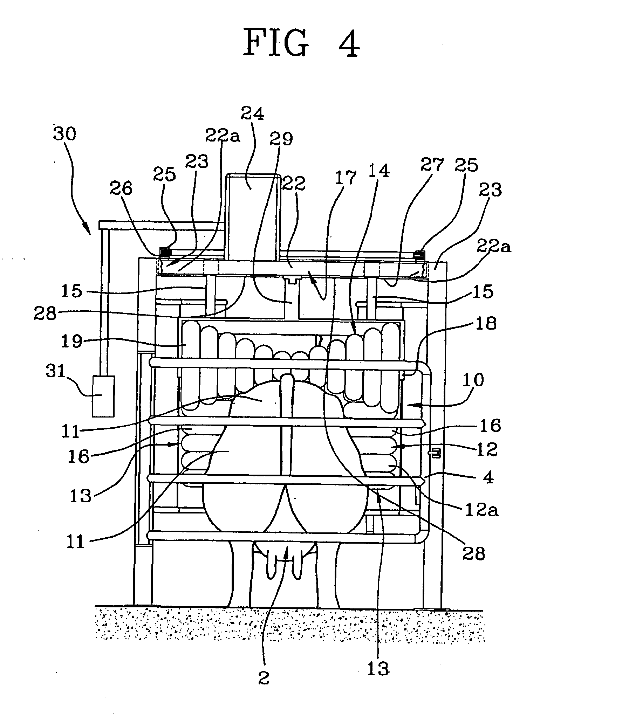

- Fig. 4 is a rear view of the apparatus shown in Fig. 1.

With reference to the attached figures, numeral 1 indicates as a whole an apparatus for the treatment of slaughter animals 2.

It is to be noted that the apparatus 1 is advantageously used for the treatment of cattle to improve the properties of the flesh thereof upon the slaughter process.

However, it is pointed out that the present invention can be used for any type of slaughter animal that requires a muscles-manipulation treatment.

However, the attached figures show, by way of non-limiting example, a bovine 2.

The apparatus 1 is provided with a frame 3 for restraining at least one animal 2 to be treated, said frame being predisposed for keeping still the animal 2 in a preset position.

Preferably, the frame 3 is cage-shaped and exhibits an entry door 4 through which the animal 2 is admitted.

On the side opposite to the entry door 4, an exit door 5 is developed through which the animal 2 is driven out upon completion of the treatment.

In this way, when inside the frame 3 the animal 2 takes up a position in which its back region is in correspondence of the entry door 4 and its front region is in correspondence of the exit door 5.

It is also to be noted that the exit door 5 is provided with a device 6 for blocking the head of animal 2, said device being able to restrain the body of the animal 2 to the frame 3 by preventing the same animal from moving away from the respective position.

In particular, the blocking device 6 exhibits a pair of side partitions 7, located at the sides of the exit door 5, which allow the head of animal 2 to be disposed between a first and a second vertical bars 8, 8a which are both engaged onto the exit door 5.

The second vertical bar 8a is pivoted to a support rod 9 of the exit door 5 in correspondence of a middle region. In this way, the second bar 8a can rotate to move a respective end 8b close to/away from the respective first bar 8. Advantageously, when the end 8b of the second bar 8a is moved away from the first bar 8, the animal 2 can insert its head between the said bars 8, 8a. At this point, the second bar 8a is manually rotated along the direction "A" to move the respective end 8b close to the first bar 8, thereby preventing the animal 2 from withdrawing its head out of the exit door 5.

The apparatus 1 further comprises a pressing member 10 disposed within the frame 3, for pressing at least one region 11 to be treated of animal 2.

In greater detail, the pressing member 10 exhibits at least one roller element 12, provided with an external surface 12a for rolling onto the region to be treated 11 of animal 2.

For example, in the illustrated case in which the animal 2 is a bovine, regions 11 are treated corresponding to the back and rear flanks of the animal. Such regions 11 result to be those in which the fat tends to collect and which require, therefore, repeated massage operations.

It is pointed out, however, that the roller element 12 can operate onto any region of the animal 2, depending on the animal and the product to be obtained after slaughtering the same animal 2.

In the present case, the pressing member 10 is made up of at least two side roller elements 13 located on opposite sides of the animal 2, and of at least one upper roller element 14 located above the animal 2.

In particular, each side roller element 13 is located in correspondence of a flank of the animal 2 and exhibits a body 15, having longitudinal, substantially vertical development, on which a plurality of wheels 16 are mounted. Each wheel is rotatively mounted on the body 15 to rotate around the longitudinal development of same body 15. Each wheel 16 defines the said external cylindrical surface 12a for the rolling thereof onto the region 11 to be treated which, in this case, consists of the rear flank of the animal 2.

It is also pointed out that the wheels 16 are coaxial and close to each other to act on a wide region 11 to be treated. Advantageously, the number of wheels 16 disposed on the body 15 is suitably proportional to the extension of the region 11 to be treated (and to the size of the animal 2 under treatment).

The pressing member 10 further exhibits a device 17 for actuation of the side roller elements 13 and moving them between a condition of non-use, in which they are moved away from each other, and a condition of use, in which they are moved close to each other and made to abut on the respective side flanks of the animal 2. Advantageously, in the said condition of use, each wheel 16 is kept in contact with the region to be treated 11 to press thereon.

The actuation device 17 may consist of suitable pneumatic pistons (not to be described in detail as being of known type) able to move the bodies 15 of the side roller elements 13.

The upper roller element 14 comprises a horizontal bar 18, on which a plurality of wheels 19 are mounted for rotation about the longitudinal development of same bar 18.

Each wheel 19 defines the external, cylindrical surface 12a for the rolling thereof onto the region to be treated 11 of animal 2, which region is, in this case, the back of the animal 2.

The wheels 19 of the upper roller element 14 are coaxial and close to each other to act on the whole extension of the back of animal 2.

It is also to be considered that, as illustrated in the attached figures, the wheels 19 may have different diameters for the whole upper roller-element 14 to countershape the outline of the back of animal 2.

In this situation, it can be noted that the wheels 19 exhibit, from the centre of element 14 to the respective side ends, an increasing diameter which allows them to match the curvature of the back of animal 2.

Likewise the side roller elements 13, the upper roller element 14 is associated with an actuation device 20 for moving the same element 14 from a condition of non-use in which it is moved away from the back of the animal 2, to a condition of use in which it is made to abut on the back of the animal 2.

In this way, in the said condition of use of the upper roller element 14, the wheels 19 are pressed onto a respective region to be treated 11 defined by the back of animal 2.

Also in this case, the actuation device 20 may consist of a pneumatic piston able to move downwardly the horizontal bar 18 close to the animal 2 (condition of use), or upwardly away from the animal 2 (condition of non-use).

The apparatus 1 further comprises motor means 21 for driving the pressing member 10 along a preset path corresponding to the region 11 of the animal 2 to be treated.

In particular, the driving means 21 allow moving the pressing member 10 in a reciprocating motion along a direction "D" corresponding to the longitudinal development of the frame 3.

In particular, the means 21 for driving the pressing member 10 comprise a cross-piece 22 slidingly mounted to an upper region of frame 3.

The cross-piece 22 exhibits two ends 22a opposite to one another and each being inserted into a respective slide guide 23. It should be noted that the slide guides are parallel to each other and formed on the frame 3 to extend above and along the longitudinal development of the animal 2.

The driving means 21 also exhibit a motor 24 of known type (not to be described in greater detail) associated with the cross-piece 22 to move the same cross-piece 22 along the guides 23 according to a reciprocating motion along the direction "D".

In greater detail, each end 22a of cross-piece 22 exhibits a gear 25 operatively associated with the motor 24 for rotation about a respective axis corresponding to the longitudinal development of cross-piece 22. Each gear is made to mesh with a toothing 26 developing along the respective slide guide 23. In this way, the rotation of gears 25 onto the toothing 26 of guides 23 causes the cross-piece to be moved along the preset path in the direction "D".

It can also be noted that the cross-piece 22 exhibits a lower support 27 for bearing the side roller elements 13 and is provided with a guide 28 for the sliding of same side elements 13. In this way, driving the cross-piece 22 in the direction "D", implies also moving the side roller elements 13 along the longitudinal development of the animal 2. Moreover, the slide guide 28, which runs longitudinally throughout the cross-piece 22, allows moving the side elements 13 close to/away from each other, between the condition of non-use and the condition of use.

The lower support 27 is able to bear also the upper roller element 14, to carry the same, together with the side elements 13, along the present path in the direction "D".

In other words, driving the cross-piece 22 into a reciprocating motion along the direction "D" makes it possible to roll the roller elements 13, 14 onto the regions 11 to be treated of animal 2 and defined by the flanks and back of same animal 2.

The lower support 27 carries also an actuator 29 to move the upper roller element 14 away from/close to the cross-piece 22, between the respective condition of non-use and condition of use.

Advantageously, the apparatus 1 is further provided with an electronic system 30 for controlling the activation of motor 24 which drives into motion the said roller elements 13, 15. The system 30 has a control device 31, disposed outside the frame 3, by which the movement of the side roller elements 13 and upper roller 14, as well as of motor 24 for displacing the cross-piece 22 along the direction "D", is operated.

In this way, at first, when the animal 2 is admitted into the frame 3, the blocking device 6 is manually actuated to engage the animal 2 to the frame 3. Afterwards, by means of the cited control device 31, the side roller elements 13 and the upper roller element 14 are moved into the respective operating conditions. At this point, the motor 24 is started to drive the gears 25 into rotation within the respective slide guides 23.

In this way, the cross-piece begins to move into a reciprocating motion along the direction "D", thereby causing the wheels 16, 19 of roller elements 13, 14 to slide onto the regions 11 to be treated of animal 2. The action of wheels 16, 19 over the body of the animal 2 is therefore that of a massage able to marble the flesh, by dissolving the tendons and mixing the fat within the flesh.

Advantageously, the massage caused by the rolling of wheels 16, 19 onto the animal 2 is repeated periodically throughout the breeding time thereof according to the type of animal 2 and of the produced flesh.

In this way, it is possible to obtain marbled flesh without the manual intervention of an operator, with consequent advantages in terms of production costs of the flesh.

## Claims

1. Apparatus for the treatment of slaughter animals, comprising:
- a frame (3) for restraining at least one animal (2) to be treated so as to keep still said animal (2) in a preset position;
- a pressing member (10) for pressing at least one region (11) to be treated of said animal (2) disposed within said restraining frame (3); and
- motor means (21) of said pressing member (10) for driving said pressing member (10) along a preset path corresponding to the region (11) of the animal (2) to be treated; wherein said
pressing member (10) comprises at least one upper roller element (14) disposed above said animal (2); and
an actuation device (20) for moving said upper roller element (14) between a condition of non-use in which it is moved away from said animal (2), and a condition of use in which it is made to abut on the back of the animal (2) ; **characterized in that**
said upper roller element (14) comprises a horizontal bar (18) having longitudinal development transverse to the path of movement (D) of the pressing member (10), and a plurality of wheels (19) coaxial and close to each other; each wheel (19) being rotatively mounted on said bar (18) for rotation about the longritudinal development of same bar (18), and in the condition of use of the upper roller element (14), being pressed onto a respective region to be treated (11) defined by the back of the animal (2); the wheels (19) defining the external cylindrical surface (12a) for the rolling thereof over said region to be treated (11) of the animal (2) and presenting different diameters for the whole upper roller-element (14) to countershape the outline of the back of animal (2).

2. Apparatus according to the preceding claim, **characterized in that** said pressing member (10) comprises at least one roller element (12) having an external surface (12a) for rolling onto the region to be treated (11) of the animal (2).

3. apparatus according to the claim 1 or 2, **characterized in that** said pressing member (10) comprises: at least two side roller elements (13) located in correspondence of the flanks of said animal (2); and a device (17) for actuating of said side roller elements (13) to move them between a condition of non-use in which they are moved away from each other, and a condition of use in which they are moved close to each other and made to abut on the respective flanks of the animal (2).

4. Apparatus according to the preceding claim, **characterized in that** each side roller element (13) comprises a body (15) having longitudinal development transverse to the path of movement (D) of pressing member (10), and at least one wheel (16) rotatively mounted on said body (15) to rotate around the longitudinal development of same body (15); said wheel (16) defining the external cylindrical surface (12a) for the rolling thereof onto the region to be treated (11) of the animal (2).

5. Apparatus according to the preceding claim, **characterized in that** said side roller elements (13) comprise a plurality of wheels (16) coaxial and close to each other; each wheel (16), in the condition of use of the side elements (13), being pressed onto a respective region to be treated (11) defined by the flanks of the animal (2).

6. Apparatus according to any of the preceding claims, **characterized in that** said motor means (21) for driving the pressing member (10) comprise: a cross-piece (22) slidingly mounted in an upper region of said frame (3) and exhibiting two opposite ends (22a) inserted into respective slide guides (23) formed on said frame (3) and extending parallel to each other along the longitudinal development of the animal (2); and a motor (24) associated with said cross-piece (22) to move the same cross-piece (22) along said guides (23) with a reciprocating linear motion.

7. Apparatus according to the preceding claim, **characterized in that** each end (22a) of cross-piece 22 exhibits a gear (25) operatively associated with said motor (24) and made to mesh with a toothing (26) developing along the respective slide guide (23); said gear (25) of each end (22a) of cross-piece (22) rotating on said toothing (26) for moving same cross-piece (22) along said preset path (D).

8. Apparatus according to claim **6** when dependent on claim 3, **characterized in that** said cross-piece (22) exhibits a lower support (27) for bearing said side roller elements (13); said lower support (27) exhibiting a slide guide (28) for sliding the side roller elements (13) and move them along said guide (28) in a direction corresponding to the longitudinal development of the cross-piece (22) between the respective condition of non-use and condition of use.

9. Apparatus according to claim **6** when dependent on claim 3, **characterized in that** said cross-piece (22) exhibits a lower support (27) for bearing said upper roller element (14); said lower support (27) exhibiting an actuator (29) for moving the upper roller element (14) away from/close to said cross-piece (22), between the respective condition of non-use and condition of use.

10. Apparatus according to any of the preceding claims, **characterized in that** said frame (3) comprises an entry door (4), located in correspondence of an upper region of the animal (2) for admitting the animal (2) within the frame (3), and an exit door (5), located in correspondence of the front region of the animal (2), for driving out the animal (2); said preset path (D) of the pressing member (10) developing between said entry and exit doors (4, 5) of the frame (3) to treat the region (11) of the animal (2) along the longitudinal development of same animal (2).

11. Apparatus according to the preceding claim, **characterized in that** it further comprises a device (6) for blocking the head of the animal (2), disposed in correspondence of said exit door (5) to restrain the body of animal (2) to said frame (3).

## Patentansprüche

1. Vorrichtung zur Behandlung von Schlachttieren, umfassend:
- einen Rahmen (3) zum Halten mindestens eines zu behandelnden Tiers (2), sodass dieses Tier (2) in einer vorgegebenen Stellung still gehalten wird;
- ein Presselement (10) zum Pressen mindestens eines zu behandelnden Bereichs (11) des im Halterahmen (3) angeordneten Tiers (2) und
- Antriebsmittel (21) des Presselements (10), um dieses Presselement (10) entlang eines vorgegebenen Wegs, entsprechend dem Bereich (11) des zu behandelnden Tiers (2), zu bewegen, wobei das
Presselement (10) mindestens ein oberes Rollenelement (14) umfasst, das über dem Tier (2) angeordnet ist, und
eine Betätigungseinrichtung (20) zum Bewegen des oberen Rollenelements (14) zwischen einem Zustand der Nichtverwendung, in dem es vom Tier (2) wegführend bewegt wird, und einem Zustand der Verwendung, in dem bewirkt wird, dass es am Rücken des Tiers (2) anschlägt, **dadurch gekennzeichnet, dass** das obere Rollenelement (14) einen waagerechten Stab (18), aufweisend eine quer verlaufende Längsentwicklung zum Bewegungsweg (D) des Presselements (10), umfasst, und eine Vielzahl von Rädern (19), die koaxial und nahe aneinander angeordnet sind, wobei jedes Rad (19) drehbar am Stab (18) montiert ist, um sich um die Längsentwicklung des Stabs (18) und im Verwendungszustand des oberen Rollenelements (14) zu drehen, wobei dieses auf einen entsprechenden zu behandelnden Bereich (11) gepresst wird, definiert durch den Rücken des Tiers (2), wobei die Räder (19) die äußere zylindrische Oberfläche (12a) für das Rollen über diesen zu behandelnden Bereich (11) des Tiers definieren, und aufweisend unterschiedliche Durchmesser für das ganze obere Rollenelement (14), um die Kontur des Rückens des Tiers (2) gegenzuformen.

2. Vorrichtung nach dem vorhergehenden Anspruch, **dadurch gekennzeichnet, dass** das Presselement (10) mindestens ein Rollenelement (12) umfasst, aufweisend eine äußere Oberfläche (12a) zum Rollen auf dem zu behandelnden Bereich (11) des Tiers (2).

3. Vorrichtung nach Anspruch 1 oder 2, **dadurch gekennzeichnet, dass** das Presselement (10) umfasst:
mindestens zwei seitliche Rollenelemente (13), befindlich an den Flanken des Tiers (2), und eine Einrichtung (17) zum Betätigen dieser seitlichen Rollenelemente (13), um diese zwischen einem Zustand der Nichtverwendung, in dem sie voneinander wegführend bewegt werden, und einem Zustand der Verwendung, in dem sie zueinander hinführend bewegt und veranlasst werden, an den jeweiligen Flanken des Tiers (2) anzuschlagen, zu bewegen.

4. Vorrichtung nach dem vorhergehenden Anspruch, **dadurch gekennzeichnet, dass** jedes seitliche Rollenelement (13) einen Körper (15), aufweisend eine quer zum Bewegungsweg (D) des Presselements (10) verlaufende Längsentwicklung, umfasst sowie mindestens ein Rad (16), drehbar montiert an diesem Körper (15), um sich um die Längsentwicklung des Körpers (15) zu drehen, wobei das Rad (16) die äußere zylindrische Oberfläche (12a) für das Rollen auf dem zu behandelnden Bereich (11) des Tiers (2) definiert.

5. Vorrichtung nach dem vorhergehenden Anspruch, **dadurch gekennzeichnet, dass** die seitlichen Rollenelemente (13) eine Vielzahl an Rädern (16) umfassen, die koaxial und nahe aneinander angeordnet sind, wobei jedes Rad (16) im Verwendungszustand der seitlichen Elemente (13) auf einen jeweiligen zu behandelnden Bereich (11) gepresst wird, definiert durch die Flanken des Tiers (2).

6. Vorrichtung nach einem der vorhergehenden Ansprüche, **dadurch gekennzeichnet, dass** die Antriebsmittel (21) zum Bewegen des Presselements (10) umfassen: ein Kreuzstück (22), das verschiebbar in einem oberen Bereich des Rahmens (3) montiert ist und zwei entgegengesetzte Enden (22a) aufweist, die in jeweilige Gleitführungen (23) eingesetzt sind, ausgebildet auf dem Rahmen (3) und sich erstreckend parallel zueinander entlang einer Längsentwicklung des Tiers (2), sowie einen Motor (24), verbunden mit dem Kreuzstück (22), um das Kreuzstück (22) entlang der Führungen (23) mit einer linearen Pendelbewegung zu bewegen.

7. Vorrichtung nach dem vorhergehenden Anspruch, **dadurch gekennzeichnet, dass** jedes Ende (22a) des Kreuzstücks (22) ein Getriebe (25) aufweist, das betriebswirksam mit dem Motor (24) verbunden ist und in eine Verzahnung (26) eingreift, die sich entlang der jeweiligen Gleitführung (23) entwickelt, wobei sich das Getriebe (25) jeden Endes (22a) des Kreuzstücks (22) um die Verzahnung (26) dreht, um das Kreuzstück (22) entlang des vorgegebenen Wegs (D) zu bewegen.

8. Vorrichtung nach Anspruch 6, wenn dieser von Anspruch 3 abhängt, **dadurch gekennzeichnet, dass** das Kreuzstück (22) eine untere Halterung (27) aufweist, um die seitlichen Rollenelemente (13) zu tragen, wobei die untere Haltung (27) eine Gleitführung (28) für das Gleiten der seitlichen Rollenelemente (13) und deren Verfahren entlang der Führung (28) in einer Richtung, die der Längsentwicklung des Kreuzstücks (22) zwischen dem jeweiligen Nichtverwendungs- und dem Verwendungszustand entspricht, aufweist.

9. Vorrichtung nach Anspruch 6, wenn dieser von Anspruch 3 abhängt, **dadurch gekennzeichnet, dass** das Kreuzstück (22) eine untere Halterung (27) aufweist, um das obere Rollenelement (14) zu tragen, wobei die untere Haltung (27) einen Stellantrieb (29) zum Bewegen des oberen Rollenelements (14) wegführend vom/hinführend zum Kreuzstück (22) zwischen dem jeweiligen Nichtverwendungs- und dem Verwendungszustand aufweist.

10. Vorrichtung nach einem der vorhergehenden Ansprüche, **dadurch gekennzeichnet, dass** der Rahmen (3) eine Eingangstür (4) umfasst, die sich an einem oberen Bereich des Tiers (2) befindet, um das Tier (2) in den Rahmen (3) einzulassen, und eine Ausgangstür (5), die sich am frontseitigen Bereich des Tiers (2) befindet, um das Tier (2) herauszuführen, wobei sich der vorgegebene Weg (D) des Presselements (10) zwischen der Eingangs- und der Ausgangstür (4, 5) des Rahmens (3) zur Behandlung des Bereichs (11) des Tiers (2) entlang der Längsentwicklung des Tiers (2) entwickelt.

11. Vorrichtung nach dem vorhergehenden Anspruch, **dadurch gekennzeichnet, dass** sie zudem eine Einrichtung (6) zum Festspannen des Kopfs des Tiers (2) umfasst, angeordnet an der Ausgangstür (5), um den Körper des Tiers (2) am Rahmen (3) festzuhalten.

## Revendications

1. Appareil pour le traitement des animaux d'abattage, comprenant :
- un châssis (3) servant à retenir au moins un animal (2) à traiter de manière à toujours garder ledit animal (2) dans une position prédéterminée ;
- un organe de pression (10) servant à exercer une pression au moins sur une zone (11) à traiter dudit animal (2) placé à l'intérieur dudit châssis de retenue (3) ; et
- des moyens moteurs (21) dudit organe de pression (10) servant à entraîner ledit organe de pression (10) le long d'un parcours prédéterminé correspondant à la zone (11) de l'animal (2) à traiter ; dans lequel ledit
organe de pression (10) comprend au moins un élément supérieur à rouleau (14) disposé au-dessus dudit animal (2) ; et
un dispositif d'actionnement (20) servant à déplacer ledit élément supérieur à rouleau (14) entre une condition non fonctionnelle dans laquelle il est éloigné dudit animal (2) et une condition fonctionnelle dans laquelle il vient buter contre le dos de l'animal (2) ; **caractérisé en ce que**
ledit élément supérieur à rouleau (14) comprend une barre horizontale (18) ayant un développement longitudinal transversal au parcours du déplacement (D) de l'organe de pression (10) ainsi qu'une pluralité de roues (19) coaxiales et proches les unes des autres ; chaque roue (19) étant montée de façon rotative sur ladite barre (18) pour tourner autour du développement longitudinal de la même barre (18) et, dans la condition fonctionnelle de l'élément supérieur à rouleau (14), exerçant une pression sur une zone correspondante à traiter (11) définie par le dos de l'animal (2) ; les roues (19) définissant la surface cylindrique externe (12a) pour le roulement sur ladite zone à traiter (11) de l'animal (2) et présentant différents diamètres pour l'intégralité de l'élément supérieur à rouleaux (14) pour épouser les contours du dos de l'animal (2).

2. Appareil selon la revendication précédente, **caractérisé en ce que** ledit organe de pression (10) comprend au moins un élément à rouleau (12) ayant une surface externe (12a) pour rouler sur la zone à traiter (11) de l'animal (2).

3. Appareil selon les revendications 1 ou 2, **caractérisé en ce que** ledit organe de pression (10) comprend : au moins deux éléments latéraux à rouleau (13) situés en correspondance des flancs dudit animal (2) et un dispositif (17) servant à actionner lesdits éléments latéraux à rouleau (13) pour les déplacer entre une condition non fonctionnelle dans laquelle ils sont réciproquement éloignés et une condition fonctionnelle dans laquelle ils sont réciproquement rapprochés pour buter sur les flancs respectifs de l'animal (2).

4. Appareil selon la revendication précédente, **caractérisé en ce que** chaque élément latéral à rouleau (13) comprend un corps (15) ayant un développement longitudinal transversal au parcours du déplacement (D) de l'organe de pression (10) ainsi qu'au moins une roue (16) montée de façon rotative sur ledit corps (15) pour tourner autour du développement longitudinal du même corps (15) ; ladite roue (16) définissant la surface cylindrique externe (12a) pour le roulement sur la zone à traiter (11) de l'animal (2).

5. Appareil selon la revendication précédente, **caractérisé en ce que** les éléments latéraux à rouleau (13) comprennent une pluralité de roues (16) coaxiales et proches les unes des autres ; chaque roue (16), dans la condition fonctionnelle des éléments latéraux (13), exerçant une pression sur une zone correspondante à traiter (11) définie par les flancs de l'animal (2).

6. Appareil selon l'une quelconque des revendications précédentes, **caractérisé en ce que** lesdits moyens moteurs (21) servant à entraîner l'organe de pression (10) comprennent : une traverse (22) montée de façon coulissante dans une zone supérieure dudit châssis (3) et présentant deux extrémités opposées (22a) insérées dans des guides coulissants correspondants (23) formés sur ledit châssis (3) et se développant parallèlement entre elles le long du développement longitudinal de l'animal (2) ; ainsi qu'un moteur (24) associé à ladite traverse (22) pour déplacer la même traverse (22) le long desdits guides (23) avec un déplacement linéaire de va-et-vient.

7. Appareil selon la revendication précédente, **caractérisé en ce que** chaque extrémité (22a) de la traverse (22) présente un engrenage (25) fonctionnellement associé au dit moteur (24) et pouvant s'engrener avec une denture (26) se développant le long du guide coulissant respectif (23) ; ledit engrenage (25) de chaque extrémité (22a) de la traverse (22) tournant sur ladite denture (26) pour déplacer la même traverse (22) le long dudit parcours prédéterminé (D).

8. Appareil selon la revendication 6 lorsqu'elle dépend de la revendication 3, **caractérisé en ce que** ladite traverse (22) présente un support inférieur (27) pour supporter lesdits éléments latéraux à rouleau (13) ; ledit support inférieur (27) présentant un guide coulissant (28) servant à faire coulisser les éléments latéraux à rouleau (13) et à les déplacer le long dudit guide (28) dans une direction correspondant au développement longitudinal de la traverse (22) entre les conditions fonctionnelle et non fonctionnelle correspondantes.

9. Appareil selon la revendication 6 lorsqu'elle dépend de la revendication 3, **caractérisé en ce que** ladite traverse (22) présente un support inférieur (27) pour supporter ledit élément supérieur à rouleau (14) ; ledit support inférieur (27) présentant un actionneur (29) servant à éloigner / rapprocher l'élément supérieur à rouleau (14) de ladite traverse (22) entre les conditions fonctionnelle et non fonctionnelle correspondantes.

10. Appareil selon l'une quelconque des revendications précédentes, **caractérisé en ce que** ledit châssis (3) comprend une porte d'entrée (4), située en correspondance d'une zone supérieure de l'animal (2) pour laisser entrer l'animal (2) à l'intérieur du châssis (3), et une porte de sortie, (5) située en correspondance de la zone antérieure de l'animal (2) pour faire sortir l'animal (2) ; ledit parcours prédéterminé (D) de l'organe de pression (10) se développant entre lesdites portes d'entrée et de sortie (4, 5) du châssis (3) afin de traiter la zone (11) de l'animal (2) le long du développement longitudinal du même animal (2).

11. Appareil selon la revendication précédente, **caractérisé en ce qu'**il comprend de plus un dispositif (6), servant à bloquer la tête de l'animal (2), disposé en correspondance de ladite porte de sortie (5) pour retenir le corps de l'animal (2) à ledit châssis (3).
